# EUROPÄISCHE PATENTSCHRIFT

(11) **EP 3 432 684 B1**
(45) Veröffentlichungstag und Bekanntmachung des Hinweises auf die Patenterteilung: **14.09.2022**
(21) Anmeldenummer: 18179202.9
(22) Anmeldetag: 22.06.2018
(51) Int. Cl.: H05B 6/06

(54) **VERFAHREN ZUM BETRIEB EINES KOCHFELDES**
METHOD FOR OPERATING A CLEANING DEVICE
PROCÉDÉ DE FONCTIONNEMENT D'UNE PLAQUE DE CUISSON

(30) Priorität: 17.07.2017 DE 102017212216
(43) Veröffentlichungstag der Anmeldung: 23.01.2019
(73) Patentinhaber: E.G.O. Elektro-Gerätebau GmbH, 75038 Oberderdingen (DE)
(72) Erfinder: Egenter, Christian, 75015 Bretten (DE); Fuchs, Etienne, 68789 St. Leon-Rot (DE); Lomp, Stephane, 75038 Oberderdingen (DE)
(74) Vertreter: Patentanwälte Ruff, Wilhelm, Beier, Dauster & Partner mbB

(56) Entgegenhaltungen:
- EP-A1- 2 068 598
- EP-A1- 2 389 045
- EP-A1- 2 509 392
- EP-A1- 3 021 639
- EP-A2- 2 242 328
- EP-A2- 2 506 668
- WO-A1-2010/118943
- DE-A1-102014 110 026

## Beschreibung

Die Erfindung betrifft ein Verfahren zum Betrieb eines Kochfeldes, wobei das Kochfeld mehrere nebeneinander und hintereinander angeordnete Induktionsheizspulen als Heizeinrichtungen aufweist, die in einem Heizbereich angeordnet sind.

Aus der WO 2009/053279 A1 ist ein Kochfeld bzw. Flächenkochfeld bekannt, das mehrere nebeneinander und hintereinander in einem Heizbereich angeordnete Heizeinrichtungen aufweist. Darin ist beschrieben, wie eine Heizleistung für ein über mehrere Heizeinrichtungen aufgestelltes Kochgefäß verteilt erbracht wird. Dabei kann auch der Fall auftreten, dass eine Heizeinrichtung von zwei Kochgefäßen bedeckt wird, wobei eines dieser Kochgefäße auch noch einmal eine weitere Heizeinrichtung bedecken kann.

Sogenannte Flächenkochfelder mit einer Vielzahl von Heizeinrichtungen, auf der weitestgehend frei Heizzonen für jeweils ein Kochgefäß gebildet werden können, finden immer weiter Verbreitung. Es soll dabei im Besonderen erlaubt sein, dass auf einer einzigen Heizeinrichtung mehr als eine Heizzone erkannt wird, also mehr als ein Kochgefäß aufgesetzt sein kann. Das heißt, dass es bei unterschiedlichen Bedienereinstellungen für diese Heizzonen zum Konflikt auf einer gemeinsam überdeckten Heizeinrichtung kommt, der nur ganzheitlich eine Leistungseinstellung zugeordnet werden kann. Eine Konfliktsituation tritt umso wahrscheinlicher auf, je großflächiger die Heizeinrichtungen ausgebildet sind. So können technisch bereits Konflikte auftreten, obwohl der Abstand zwischen den Heizzonen von der Bedienperson noch als groß wahrgenommen wird, beispielsweise größer als 10 cm oder 15 cm Abstand.

Es müssen also Regeln definiert werden, welche Kombinationen von Einstellungen für die Heizzonen bzw. für die Heizeinrichtungen, die die Heizzonen für ein zu beheizendes Kochgefäß bilden, zulässig sein sollen, und welche Regeln für die resultierende Leistungseinstellung einer Heizeinrichtung mit einem Konflikt abgeleitet werden. Kriterien hierfür sind eine möglichst homogene Beheizung jeder Heizzone bzw. jedes Kochgefäßes auch im Konfliktfall unter Vermeidung von sogenannten Hotspots, an denen ein Lebensmittel im Kochgefäß anbrennen würde, ein effizientes Beheizen der Kochgefäße, das Vermeiden einer Vielzahl von Warnmeldungen an die Bedienperson sowie Sicherheit gegen unbeabsichtigtes Beheizen eines Kochgefäßes.

Im einfachsten Fall wird beim Erkennen des Konflikts der Bedienperson ein Fehler angezeigt und die Leistungszufuhr unterbrochen bis die Aufstellposition mindestens eines Kochgefäßes so korrigiert wurde, dass die Heizzonen wieder unabhängig beheizt werden können. Eine alternative, naheliegende Lösung ist der Betrieb der Heizeinrichtung mit dem Konflikt mit der kleinsten Leistungsdichte, das entspricht der zugeordneten Leistung auf dieser Heizeinrichtung geteilt durch die von dem Kochgefäß bedeckte Fläche auf dieser Heizeinrichtung, die einem der Kochgefäße über eine Bedieneingabe als Soll-Leistungsstufe zugeordnet wurde. Alternativ könnte die Leistungsdichte der beiden Kochgefäße auf der Heizeinrichtung mit Konflikt auch gemittelt werden, um so die partielle Unter- oder Überbeheizung für alle Kochgefäße möglichst gleichmäßig zu verteilen.

Eine weitere Lösung wäre es, der zweiten Heizzone bzw. dem zweiten Kochgefäß automatisch die Einstellung der ersten Heizzone bzw. des ersten Kochgefäßes zuzuordnen. Dies ist aus der EP 2509392 A1 und der DE 112008002807 B4 bekannt. Es stellt aber keine zufriedenstellende Lösung des Problems dar, weil die Heizzone mit der geringeren Soll-Leistungsstufe dann deutlich zu hoch beheizt werden würde und somit auch ein aufgestelltes Kochgefäß.

Aus der DE 102014110026 A1 ist ein Verfahren zum Betrieb eines Kochfelds bekannt, bei dem für zwei Kochgefäße jeweils ein Soll-Leistungswert vorgegeben wird zu deren Beheizung, wobei hierfür mindestens eine von mehreren Heizeinrichtungen des Kochfelds verwendet werden soll. Es wird überprüft, ob die beiden Kochgefäße gemeinsam eine Heizeinrichtung bedecken. Dann muss, falls die beiden Kochgefäße mit unterschiedlichen Leistungen beheizt werden sollen, für die gemeinsam bedeckte Heizeinrichtung ein Leistungswert gefunden werden.

Aus der EP 3021639 A1 ist ein sehr ähnliches Kochfeld bekannt. Hierbei sollen benachbarte Induktionsheizeinrichtungen eine zueinander versetzte Phasenlage aufweisen.

Aus der EP 2389045 A1 ist ein Verfahren zum Betrieb eines ähnlich aufgebauten Induktionskochfelds mit mehreren Induktionsheizspulen bekannt, bei dem mindestens zwei Heizzonen erfasst werden, die jeweils von mindestens einer Induktionsheizspule gebildet sind. Die Gesamtheit aller Heizzonen wird dabei in Untergruppen aufgeteilt und die betriebenen Heizzonen werden eine Untergruppe zugeordnet, wobei das Kriterium für eine Zuordnung der Heizzonen zu einer Untergruppe davon abhängt, wie nahe die Heizzonen bzw. die jeweiligen Induktionsheizspulen zueinander sind.

### AUFGABE UND LÖSUNG

Der Erfindung liegt die Aufgabe zugrunde, ein eingangs genanntes Verfahren zum Betrieb eines Kochfeldes zu schaffen, mit dem Probleme des Standes der Technik vermieden werden können und es insbesondere möglich ist, auf einfache Art und Weise ein Kochfeld zu betreiben bzw. steuern und vorzugsweise ein Kochfeld so steuern zu können, dass mehrere Kochgefäße gut beheizt werden können.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüche und werden im Folgenden näher erläutert.

Das Kochfeld weist mehrere nebeneinander und hintereinander in einem Heizbereich angeordnete Induktionsheizspulen als Heizeinrichtungen auf. Das Verfahren zum Betrieb des Kochfeldes weist die im Folgenden wiedergegebenen Schritte auf. Zuerst ist oder wird für ein erstes Kochgefäß ein erster Soll-Leistungswert vorgegeben, mit dem das erste Kochgefäß beheizt werden soll mittels mindestens einer der Heizeinrichtungen, die von dem ersten Kochgefäß bedeckt wird. Dieser erste Soll-Leistungswert soll für die von dem ersten Kochgefäß bedeckten Heizeinrichtungen gelten. Das ist also die Leistung bzw. der Leistungswert, den eine Bedienperson an einer Bedieneinrichtung einstellt, beispielsweise eine Leistungsstufe 5 als Leistungswert. Die Bedienperson möchte das erste Kochgefäß also mit dieser Leistung bzw. Leistungsstufe beheizt haben. Es ist aber noch nicht zwingend der Leistungswert bzw. die Leistungsstufe, mit der das Kochgefäß dann auch tatsächlich beheizt wird. Aus einem Soll-Leistungswert für ein Kochgefäß wird eine Soll-Leistung für eine von dem Kochgefäß bedeckte Heizeinrichtung berechnet, und entsprechend wird aus einem Ist-Leistungswert für ein Kochgefäß eine Ist-Leistung für eine von dem Kochgefäß bedeckte Heizeinrichtung berechnet. Wie dies vorgenommen wird ist zum Teil Gegenstand dieser Erfindung. Ein Soll-Leistungswert ist in der Regel eine Soll-Leistungsstufe, kann aber auch unabgestuft vorliegen, also sozusagen beliebig gewählt werden und nicht nur in Stufen.

Verglichen werden vorteilhaft Leistungsdichten an einer Heizeinrichtung und nicht absolute Leistungen, da diese ja von der Fläche der Heizeinrichtung abhängen. Dies bedeutet, dass bei den im Folgenden beschriebenen Vergleichen nicht Leistungsstufen verglichen werden, beispielsweise "3" oder "5" oder "9", wie sie üblicherweise an Kochfeldern eingestellt werden. Es werden auch keine absoluten Leistungen in Watt verglichen, sondern eben Leistungsdichten als Soll-Leistung und als Ist-Leistung.

Alternativ zu einer Vorgabe durch eine Bedienperson kann der Soll-Leistungswert auch von einer automatischen Steuerung als sogenanntes Garprogramm vorgegeben werden. Außerdem ist oder wird für ein zweites Kochgefäß ein zweiter Soll-Leistungswert vorgegeben, mit dem das zweite Kochgefäß beheizt werden soll mittels mindestens einer der Heizeinrichtungen, die von dem zweiten Kochgefäß bedeckt wird. Der zweite Soll-Leistungswert soll also für die von dem zweiten Kochgefäß bedeckten Heizeinrichtungen gelten. Auch für den zweiten Soll-Leistungswert gelten die zuvor gemachten Bemerkungen, wie er vorgegeben wird und was er bedeutet.

Im nächsten Schritt wird überprüft, ob das erste Kochgefäß und das zweite Kochgefäß eine Heizeinrichtung gemeinsam zumindest teilweise bedecken. Für den Fall, dass das erste Kochgefäß und das zweite Kochgefäß eine gemeinsame Heizeinrichtung gemeinsam bedecken und sich zudem auch noch der erste Soll-Leistungswert und der zweite Soll-Leistungswert unterscheiden, wird überprüft, wie groß die erste relative Bedeckung dieser gemeinsamen Heizeinrichtung durch das erste Kochgefäß ist und wie groß die zweite relative Bedeckung dieser gemeinsamen Heizeinrichtung durch das zweite Kochgefäß ist. Abhängig davon bzw. abhängig von diesen beiden relativen Bedeckungen wird eine Ist-Leistung der gemeinsamen Heizeinrichtung zu deren tatsächlichem Betrieb entsprechend einem Ist-Leistungswert niedriger als der höhere der beiden Soll-Leistungswerte bestimmt. So wird mindestens eines der beiden Kochgefäße durch die gemeinsame Heizeinrichtung mit einem anderen als dem für dieses Kochgefäß vorgegebenen Soll-Leistungswert beheizt, und zwar das stärker zu beheizende Kochgefäß etwas schwächer als eigentlich vorgegeben bzw. gewünscht. Dadurch wird dem Umstand Rechnung getragen, dass es für den Kochvorgang im schwächer zu beheizenden Kochgefäß erheblich nachteiliger und somit schlechter wäre, wenn hier mehr Leistung verwendet wird, also mit einer höheren resultierenden Temperatur zubereitet wird als eigentlich gewünscht. Ein Anbrennen odgl. von Gargut könnte entstehen, was nachteiliger angesehen wird als ein zu langsames Zubereiten.

Ansatz der vorliegenden Anmeldung ist es, möglichst variabel und der spezifischen Aufstellsituation und Benutzereinstellung entsprechend den Konflikt von mehreren Kochgefäßen bzw. Heizzonen, die von den Kochgefäßen gebildet werden, auf einer gemeinsamen Heizeinrichtung zu managen. Die relative Bedeckung einer Heizzone oder eines Kochgefäßes auf einer Heizeinrichtung sollen hierbei zur Fallunterscheidung herangezogen werden, zumal die relativen Bedeckungen in vielen Konfliktfällen klein sind. Weiteres Kriterium sind die gewählten Benutzereinstellungen für die Kochgefäße, da sich hiervon unterschiedliche Akzeptanzkriterien für die Wärmeverteilung für das Kochgefäß auf den von ihm bedeckten Heizeinrichtungen ableiten. Auch soll es abhängig von der Aufstellposition und der Benutzereinstellung eines ersten Kochgefäßes im Konflikt möglich sein, die maximal zulässige Einstellung für die anderen Kochgefäße im Konflikt berechnen zu können.

Die relative Bedeckung eines Kochgefäßes auf jeder seiner Heizeinrichtungen, bei der der Bezug das Kochgefäß ist, erhält man dadurch, dass man die absolute Bedeckung des Kochgefäßes auf dieser Heizeinrichtung, bei der der Bezug die Heizeinrichtung ist, durch die Summe der absoluten Bedeckungen des Kochgefäßes auf allen durch es bedeckten Heizeinrichtungen teilt. Je kleiner diese relative Bedeckung ist, desto weniger wird die Gesamtbeheizung, was sowohl die Gleichmäßigkeit als auch die Leistungszufuhr betrifft, des Kochgefäßes durch diese Heizeinrichtung mit Konflikt beeinflusst. Das bedeutet, dass größere Abweichungen bei der Leistungsdichte zwischen dieser Heizeinrichtung und der mittleren Leistungsdichte auf allen von ihr bedeckten Heizeinrichtungen akzeptiert werden können. Umgekehrt gilt auch, dass je größer eine relative Bedeckung ist, desto wichtiger ist diese Heizeinrichtung für die Gesamtbeheizung des Kochgefäßes. Bei sehr großen relativen Bedeckungen ist diese gar dominant für die Leistung für das Kochgefäß, und unterschiedliche Einstellungen können nur eingeschränkt zugelassen werden.

Des Weiteren ist die gewählte Benutzereinstellung wichtig. Ist einem Kochgefäß keine Leistungsstufe bzw. die Soll-Leistungsstufe 0 zugeordnet, darf es überhaupt nicht erwärmt werden.

Alle von diesem Kochgefäß zumindest partiell bedeckten Heizeinrichtungen dürfen nicht beheizt werden. Bei Einstellungen für ein Kochgefäß zum Warmhalten, Kochen oder Braten, das mehrere Heizeinrichtungen bedeckt, können Konflikte gemäß den nachfolgend näher erläuterten Kriterien basierend auf der relativen Bedeckung von Kochgefäßen auf Heizeinrichtungen im Konflikt behandelt werden. Bei hohen Benutzereinstellungen zum Ankochen oder Schnellaufheizen können die Akzeptanzkriterien abgeschwächt werden, d.h. größere Abweichungen können zugelassen werden, da in diesem Fall Effizienz und Aufheizzeit wichtiger als gleichmäßige Wärmeverteilung sind.

In einem ersten Betriebsmodus, bei dem keine Heizeinrichtung von mehr als einem Kochgefäß bedeckt wird, wird vorzugsweise eine Leistungsverteilung für die Heizeinrichtungen unter einem Kochgefäß gewählt, die zu einer möglichst gleichmäßigen Wärmeverteilung im Kochgefäß führt. Hierfür wird die eingestellte Gesamtleistung für ein Kochgefäß entsprechend seiner relativen Bedeckungen auf die Heizeinrichtungen verteilt, wobei vorzugsweise kleine relative Bedeckungen zu höheren Leistungsdichten als bei großen relativen Bedeckungen der Heizeinrichtungen führen. Heizeinrichtungen mit einer erkannten Bedeckung von weniger als der Mindestbedeckung sollen nicht beheizt werden. Hierzu wird verwiesen auf die DE 102017202235.3 mit Anmeldetag vom 13. Februar 2017 derselben Anmelderin.

Werden mehrere Kochgefäße auf einer Heizeinrichtung erkannt, so können diese zumindest auf dem durch diese Heizeinrichtung beheizten Teil nur mit der gleichen Leistungsdichte betrieben werden unabhängig davon, ob den Kochgefäßen eine gleiche oder unterschiedliche Benutzereinstellungen zugeordnet sind. Bei unterschiedlichen Benutzereinstellungen soll erfindungsgemäß bevorzugt die Leistung der Kochgefäße auf ihren Heizeinrichtungen verschoben werden. Für die Heizeinrichtung mit dem Konflikt soll führend die niedrigste Leistungsdichte ermittelt im ersten Betriebsmodus der bedeckenden Kochgefäße verwendet werden, um so ein Anbrennen zu vermeiden. Es soll aber zugelassen werden, dass die niedrigste Leistungsdichte für dieses Kochgefäß erhöht wird abhängig von der relativen Bedeckung des dazugehörigen Kochgefäßes. Die Überhöhung darf umso größer sein, je kleiner die relative Bedeckung ist. Ein mögliches Kriterium könnte beispielsweise sein, dass die Gesamtleistung des Kochgefäßes geringfügig, beispielsweise um 2% bis 8%, von einer Steuerung automatisch erhöht werden darf. Alternativ ist auch eine Grenzwertkurve abhängig von der relativen Bedeckung denkbar, die umso mehr Abweichung zulässt, je kleiner die relative Bedeckung ist.

Durch die beschriebene Begrenzung der Leistungsdichte orientierend an der kleinsten Einstellung kommt es zu weniger Leistung für Kochgefäße mit höheren Soll-Leistungsstufen, da das Verschieben der fehlenden Leistung von der Heizeinrichtung im Konflikt auf eine andere von diesem Kochgefäß bedeckten Heizeinrichtung zu einer größeren Inhomogenität der Wärmeverteilung und der Gefahr von partiellen Überhitzungen führen würde und daher vorzugsweise vermieden wird. Für die resultierende Unterleistung müssen Kriterien definiert werden, was noch akzeptiert werden kann, um für alle Kochgefäße ein gutes Verhalten des Kochfelds mit noch guter Wärmeverteilung anbieten zu können. Auch für die Kochgefäße mit den höheren Einstellungen sollen erfindungsgemäß umso größere Einstellungen akzeptiert werden können, desto kleiner deren relative Bedeckung auf der Heizeinrichtung im Konflikt ist. Ein solches Akzeptanzkriterium kann eine maximal zulässige relative Leistungsabweichung vom Soll-Wert gemäß erstem Betriebsmodus, beispielsweise von 5% bis 20%, oder eine von der relativen Bedeckung abhängig festgelegte Grenzwertkurve sein. Vorzugsweise kombiniert man diese relative Leistungsabweichung noch um eine absolute Leistungsabweichung, da bei kleinen Einstellungen auch nur kleine Wärmedifferenzen im Kochgefäß auftreten werden. Weiteres Kriterium kann die Abweichung der Leistungsdichte dieses Kochgefäßes über ihren bedeckten Heizeinrichtungen sein, da dieses Kriterium den unterschiedlichen Wärmeeintrag darstellt.

Werden das oder die oben genannten Akzeptanzkriterien für ein Kochgefäß mit Konflikt und einer höheren Einstellung nicht erfüllt, dann soll dieses Kochgefäß so lange in seiner Beheizung reduziert werden, bis das oder die Akzeptanzkriterien erfüllt werden. Vorzugsweise erhält die Bedienperson beim Verstellen der Einstellung eine Rückmeldung, beispielsweise optisch oder/und akustisch. So erkennt die Bedienperson die automatisch durchgeführte Begrenzung und kann die Heizzonen auseinanderziehen, wenn höhere Einstellungen benötigt werden. Vorzugsweise erhält die Bedienperson auch eine optische und/oder akustische Rückmeldung, wenn eine Heizzone soweit verlagert wurde, dass nun wieder eine höhere Benutzereinstellung vom System akzeptiert werden kann.

In Ausgestaltung der Erfindung wird vorteilhaft überprüft, ob das erste Kochgefäß und das zweite Kochgefäß jeweils die gemeinsame Heizeinrichtung zumindest mit einer ersten absoluten Mindest-Bedeckung bedecken, wobei vorzugsweise die erste absolute Mindest-Bedeckung 5% oder sogar 8% der Fläche der Heizeinrichtung beträgt. Nur Bedeckungen von mindestens der ersten absoluten Mindest-Bedeckung werden berücksichtigt für eine Beheizung, so dass eine geringere Bedeckung unberücksichtigt bleibt so wie wenn es gar keine Bedeckung wäre. Damit wird dem Umstand Rechnung getragen, dass eine flächenmäßig sehr geringe Bedeckung durch eines der Kochgefäße dazu führt, dass auch fast keine Leistung in dieses Kochgefäß durch diese Heizeinrichtung eingetragen wird, so dass es vernachlässigbar ist, ob diese geringe oder sehr geringe Leistung eigentlich zu hoch oder zu niedrig ist als vorgegeben.

In weiterer Ausgestaltung der Erfindung kann für den Fall, dass das erste Kochgefäß oder das zweite Kochgefäß die gemeinsame Heizeinrichtung mit weniger als einer zweiten absoluten Mindest-Bedeckung bedecken, und dass außerdem gleichzeitig für beide Kochgefäße ein Soll-Leistungswert größer als Null vorgegeben ist, die gemeinsame Heizeinrichtung mit derjenigen Soll-Leistung als Ist-Leistung betrieben werden, die einem Soll-Leistungswert entspricht, der für dasjenige Kochgefäß vorgegeben ist, das die gemeinsame Heizeinrichtung mit der größeren absoluten Mindest-Bedeckung bedeckt. Diese zweite absolute Mindest-Bedeckung kann 10% bis 20% betragen, vorzugsweise etwa 15%. Hier kann also dem Kochgefäß mit der relativ größeren Bedeckung der gemeinsamen Heizeinrichtung ein direkter Vorrang eingeräumt werden, weil das andere Kochgefäß eben nur eine geringe Bedeckung aufweist. Dies ist unabhängig davon, welches Kochgefäß von den beiden den höheren Soll-Leistungswert vorgegeben hat.

Es kann vorgesehen sein, dass für den Fall, dass für eines der beiden Kochgefäße der Soll-Leistungswert Null vorgegeben ist bzw. dass dieses Kochgefäß nicht beheizt werden soll, für die gemeinsame Heizeinrichtung ebenfalls die Ist-Leistung Null vorgegeben wird bzw. diese gemeinsame Heizeinrichtung eben nicht betrieben wird. Damit wird berücksichtigt, dass das Beheizen dieses Kochgefäßes eben gar nicht erfolgen darf, wenn es auch nicht gewünscht ist. Möglicherweise kann mit einer Anzeige oder einer Signalisierung auf dieses Problem hingewiesen werden, was sich durch eine Bedienperson leicht auflösen lässt durch geringes Verschieben des Kochgefäßes. Vorteilhaft können andere Heizeinrichtungen, die von dem anderen Kochgefäß, welches eine Soll-Leistungswert größer als Null aufweist, bedeckt werden, zum Ausgleicht mit einer erhöhten Ist-Leistung betrieben werden. Diese kann so hoch sein, dass die wegfallende Soll-Leistung der nicht betriebenen gemeinsamen Heizeinrichtung über die Gesamtfläche dieses Kochgefäßes wiederum kompensiert wird. So bleibt seine gesamte Beheizung gleich, sie ist in einem Bereich eben etwas inhomogen.

In Ausgestaltung der Erfindung kann vorgesehen sein, dass abhängig von den beiden relativen Bedeckungen durch die beiden Kochgefäße eine Ist-Leistung der gemeinsam von diesen beiden bedeckten Heizeinrichtung zu deren tatsächlichem Betrieb nicht niedriger als der niedrigere der beiden Soll-Leistungswerte bzw. mindestens so hoch wie entsprechend des niedrigeren der beiden Soll-Leistungswerte bestimmt wird. So wird erreicht, dass zumindest entsprechend dem niedrigeren der beiden Soll-Leistungswerte beheizt wird. Vorzugsweise wird die Ist-Leistung höher als entsprechend des niedrigeren der beiden Soll-Leistungswerte bestimmt, so dass ein zwischenliegender Wert für eine Art Ausgleich zu sorgen versucht.

Vorteilhaft ist vorgesehen, dass eine kleine relative Bedeckung der gemeinsamen Heizeinrichtung durch das Kochgefäß mit dem niedrigeren Soll-Leistungswert zu einer stärkeren Erhöhung der Ist-Leistung der gemeinsam bedeckten Heizeinrichtung über den entsprechenden niedrigeren Soll-Leistungswert hinaus führt als wenn eine große relative Bedeckung der gemeinsamen Heizeinrichtung durch das Kochgefäß mit dem niedrigeren Soll-Leistungswert vorliegen würde. Dann wird das Kochgefäß mit dem niedrigeren Soll-Leistungswert nämlich nicht so viel stärker beheizt als gewünscht. Hier setzt sich also das relativ mehr Bedeckung ausmachende Kochgefäß mit dem höheren Soll-Leistungswert durch oder wird stärker berücksichtigt. In aller Regel wird aber auch nicht mit der Leistungsdichte beheizt, die seinem Soll-Leistungswert entspricht, da ansonsten ja das grundliegende Gebot der Erfindung, dass das Kochgefäß mit dem niedrigeren Soll-Leistungswert nicht allzu sehr zu stark beheizt werden soll, wenn auch nur in einem Bereich, verletzt werden würde.

Des Weiteren kann vorgesehen sein, dass bei einer relativen Bedeckung der gemeinsamen Heizeinrichtung von bis zu 10% durch das Kochgefäß mit dem niedrigeren Soll-Leistungswert die Ist-Leistung der gemeinsamen Heizeinrichtung maximal so weit über eine Soll-Leistung entsprechend dem niedrigeren Soll-Leistungswert erhöht wird, dass die Ist-Leistung der gemeinsamen Heizeinrichtung um maximal 60% erhöht wird. Bevorzugt kann die Ist-Leistung auch nur um maximal 50% erhöht werden. Da das Kochgefäß mit dem niedrigeren Soll-Leistungswert die gemeinsame Heizeinrichtung ja nur gering bedeckt wird dies als vertretbar angesehen als überhöhte Leistung für das Kochgefäß mit dem niedrigeren Soll-Leistungswert.

Bei einer relativen Bedeckung der gemeinsamen Heizeinrichtung von über 30% durch dieses Kochgefäß mit dem niedrigeren Soll-Leistungswert, also deutlich mehr als in dem Fall zuvor, kann die Ist-Leistung der gemeinsamen Heizeinrichtung maximal so weit entsprechend über den niedrigeren Soll-Leistungswert erhöht wird, dass die Ist-Leistung der gemeinsamen Heizeinrichtung um maximal 20% erhöht wird. Unter Umständen kann sie auch nur um maximal 17% erhöht werden. Bei dieser relativen Bedeckung liegt schon eine substantielle Bedeckung vor, und es könnte ansonsten merkbar zu viel Leistung in das Kochgefäß mit dem niedrigeren Soll-Leistungswert eingebracht werden.

In einem nochmals weiteren Fall kann bei einer relativen Bedeckung der gemeinsamen Heizeinrichtung zwischen 10% und 30% durch das Kochgefäß mit dem niedrigeren Soll-Leistungswert die entsprechende Ist-Leistung der gemeinsamen Heizeinrichtung aus den Beschränkungen bei 10% und 30% stetig, vorzugsweise monoton steigend, berechnet werden. Dies kann für eine leichtere Berechnung auch linear sein. Bevorzugt wird dabei maximal so weit über den niedrigeren Soll-Leistungswert erhöht, dass die Ist-Leistung der gemeinsamen Heizeinrichtung um maximal 20% erhöht wird. Besonders bevorzugt wird die Ist-Leistung in diesem Fall nur um maximal 15% erhöht.

In weiterer Ausbildung der Erfindung kann vorgesehen sein, dass die resultierende Leistungsreduzierung für das Kochgefäß mit dem höheren Soll-Leistungswert berechnet wird. Bei Überschreiten einer Abweichung von betragsmäßig größer als 12% oder einem gesamten Unterschied der Leistung von mindestens 50W wird der Soll-Leistungswert für dieses Kochgefäß abgesenkt bzw. reduziert. Dies erfolgt vorteilhaft so weit, dass die entsprechende Ist-Leistung der gemeinsamen Heizeinrichtung um maximal 20% unter den entsprechenden Soll-Leistungswert verringert wird. Besonders vorteilhaft wird die Ist-Leistung um maximal 17% verringert.

Für den Fall, dass eine von einem Kochgefäß bedeckte gemeinsame Heizeinrichtung, die noch von einem anderen Kochgefäß bedeckt wird, mit einer Ist-Leistung betrieben werden soll, die entsprechend unter dem Soll-Leistungswert dieses Kochgefäßes liegt, kann die Ist-Leistung einer anderen von diesem Kochgefäß bedeckten Heizeinrichtung ebenfalls niedriger als entsprechend dem Soll-Leistungswert dieses Kochgefäßes bestimmt werden. Dazu muss die Differenz zwischen der Soll-Leistung gemäß dem Soll-Leistungswert und der Ist-Leistung gemäß dem Ist-Leistungswert größer sein als 20%, vorteilhaft sogar größer sein als 30%. Die Verringerung der Ist-Leistung gemäß dem Ist-Leistungswert unterhalb der Soll-Leistung gemäß dem Soll-Leistungswert kann prozentual weniger stark erfolgen. Wird die Soll-Leistung der gemeinsamen Heizeinrichtung um 20% reduziert, so werden die anderen Heizeinrichtungen dieses Kochgefäßes um 10% reduziert.

In Ausgestaltung der Erfindung kann beim Einstellen oder Verstellen der Ist-Leistung einer Heizeinrichtung entsprechend einem Ist-Leistungswert eines bedeckenden Kochgefäßes bzw. entsprechend einem Ist-Leistungswert für ein Kochgefäß eine Rückmeldung an eine Bedienperson gegeben werden. Diese Rückmeldung kann optisch oder/und akustisch erfolgen, um eine Änderung der Einstellung des Leistungswerts zu erkennen.

Dabei kann eine Anzeige einer optischen Rückmeldung sowohl den vorgegebenen Soll-Leistungswert anzeigen als auch einen geänderten Ist-Leistungswert. Dies kann im Wechsel und/oder mit unterschiedlicher Größe und/oder Helligkeit erfolgen. Vorteilhaft kann der geänderte Ist-Leistungswert größer und/oder heller als der vorgegebene Soll-Leistungswert angezeigt werden. So ist eine Unterscheidung gut möglich und es ist gut erkennbar, wie tatsächlich beheizt wird.

In Erweiterung der Erfindung kann vorgesehen werden, dass an eine Bedienperson eine optische und/oder akustische Rückmeldung gegeben wird, wenn ein Kochgefäß so weit verschoben worden ist, dass eine Heizeinrichtung nicht mehr von zwei Kochgefäßen gemeinsam bedeckt wird. Dies ist insbesondere dann der Fall, wenn die Heizeinrichtung nicht mehr mit einer vorgenannten Mindestbedeckung von zwei Kochgefäßen gemeinsam bedeckt wird. In diesem ersten Fall kann dann wieder eine höhere Leistungswerteinstellung bzw. eine beliebige Leistungswerteinstellung ermöglicht werden, da jetzt ja quasi wieder der Fall gilt, dass die Heizeinrichtung sozusagen nur noch von einem Kochgefäß bedeckt wird.

In Ausgestaltung der Erfindung kann vorgesehen werden, dass an eine Bedienperson eine optische und/oder akustische Rückmeldung gegeben wird, wenn ein Soll-Leistungswert für eines der Kochgefäße auf der gemeinsamen Heizeinrichtung derart verändert wurde, dass die gemeinsame Heizeinrichtung nicht mehr von zwei Kochgefäßen mit unterschiedlichen Soll-Leistungswerten bedeckt ist, so dass die beiden Kochgefäße sozusagen die gleichen Soll-Leistungswerte aufweisen. Dann können diejenigen Heizeinrichtungen, die von den Kochgefäßen gemeinsam bedeckt werden, mit einer Ist-Leistung betrieben werden, die jeweils den vorgegebenen Soll-Leistungswerten entspricht.

In Ausgestaltung der Erfindung kann nach Einstellen oder Verstellen der Ist-Leistung der gemeinsamen Heizeinrichtung, evtl. zusammen mit der vorbeschriebenen Anzeige des Einstellens oder Verstellens der Ist-Leistung, das Kochgefäß bzw. die Kochgefäße mit dem niedrigeren der beiden Ist-Leistungswerte beheizt werden. Für den Fall, dass innerhalb einer Zeit von maximal 20 sec, insbesondere maximal 10 sec, mindestens ein Kochgefäß derart bewegt wird, dass es die gemeinsame Heizeinrichtung dann nicht mehr mit der eingangs genannten ersten absoluten Mindest-Bedeckung bedeckt, kann eine Änderung eines Soll-Leistungswerts eines Kochgefäßes oder einer Soll-Leistung einer Heizeinrichtung nicht mehr erfolgen. Daraufhin können automatisch die Kochgefäße mit ihren jeweils vorgegebenen Soll-Leistungswerten und diejenigen Heizeinrichtungen, die zuvor den Konflikt wegen unterschiedlicher vorgegebenen Soll-Leistungswerte hatten, mit ihren jeweils vorgegebenen Soll-Leistungen beheizt werden. Nach Überschreiten der genannten Zeit ist allerdings keine Rückkehr mehr zur ursprünglichen Einstellung vorgesehen.

In einer Weiterbildung der Erfindung kann vorgesehen sein, dass Heizeinrichtungen mit einer gesamten Bedeckung durch Kochgefäße von weniger als einer vordefinierten zweiten absoluten Mindest-Bedeckung gar nicht beheizt werden, ihre Ist-Leistung also zu Null gesetzt wird. Sie wird ausgeschaltet. Die zweite absolute Mindest-Bedeckung für den Betrieb einer Heizeinrichtung kann zu maximal 12% gewählt werden, insbesondere maximal 10%.

Vorteilhaft kann vorgesehen sein, dass eine Erhöhung der Ist-Leistung für die gemeinsame Heizeinrichtung entsprechend über den niedrigere Soll-Leistungswert maximal so groß ist, dass die gesamte Ist-Leistung, die von allen von dem entsprechenden Kochgefäß bedeckten Heizeinrichtungen gemeinsam erzeugt wird, um maximal 2% bis 10% erhöht wird. Die Ist-Leistung kann insbesondere um maximal 5% erhöht werden.

In einer Weiterbildung der Erfindung kann eine Heizeinrichtung, die nur von einem einzigen Kochgefäß bedeckt wird, das auch noch die gemeinsame Heizeinrichtung bedeckt, mit einer Ist-Leistung betrieben werden, die dann entsprechend auch nicht über dem Soll-Leistungswert dieses Kochgefäßes liegt. Vorzugsweise kann die Ist-Leistung unter dem Soll-Leistungswert liegen, wenn die gemeinsame Heizeinrichtung mit einer niedrigeren Ist-Leistung betrieben wird.

Bei der Erfindung ist vorgesehen, dass die Heizeinrichtungen als Induktionsheizspulen ausgebildet sind und zumindest teilweise auch dazu ausgebildet sind und dienen, eine Position eines aufgesetzten Kochgefäßes sowie dessen Größe zu erkennen. Es können auch noch zusätzliche Topferkennungssensoren verwendet werden, die in einem Raster verteilt sind, das enger ist als dasjenige der Anordnung der Heizeinrichtungen. Es sind also vorteilhaft mehr derartige zusätzliche Topferkennungssensoren vorgesehen als Induktionsheizspulen. Derartige Topferkennungssensoren können beispielsweise ausgebildet sein wie in der EP 3026981 A1 gezeigt.

Zumindest teilweise können die vorgenannten Topferkennungssensoren auch zwischen den Heizeinrichtungen vorgesehen sein. Vorteilhaft kann mindestens ein Topferkennungssensor an zwei seitlich nebeneinander angeordneten Heizeinrichtungen angeordnet sein, insbesondere mittig mit seinem Mittelpunkt, und mindestens ein Topferkennungssensor zwischen zwei hintereinander angeordneten Heizeinrichtungen angeordnet sein, vorzugsweise ebenso mittig mit seinem Mittelpunkt. Dann kann auch ein Bereich zwischen nebeneinanderliegenden Heizeinrichtungen gut überwacht werden.

Ein vorgenannter Topferkennungssensor kann eine Heizeinrichtung zumindest teilweise überlappen oder überdecken und somit darüber verlaufen. Dies liegt auch daran, dass die Topferkennungssensoren vorteilhaft größer sind als der Abstand bzw. Zwischenraum zwischen nebeneinanderliegenden Heizeinrichtungen. Ein Topferkennungssensor kann zwei nebeneinander angeordnete Heizeinrichtungen überlappen oder überdecken, wobei ein Mittelpunkt des Topferkennungssensors zwischen den nebeneinander angeordneten Heizeinrichtungen liegen kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Anordnung von drei Töpfen auf einem Kochfeld mit acht Induktionsheizspulen und
- Fig. 2 bis 4: verschiedene weitere Anordnungen von jeweils zwei der drei Töpfe auf demselben Kochfeld.

### DETAILLIERTE BESCHREIBUNG DER AUSFÜHRUNGSBEISPIELE

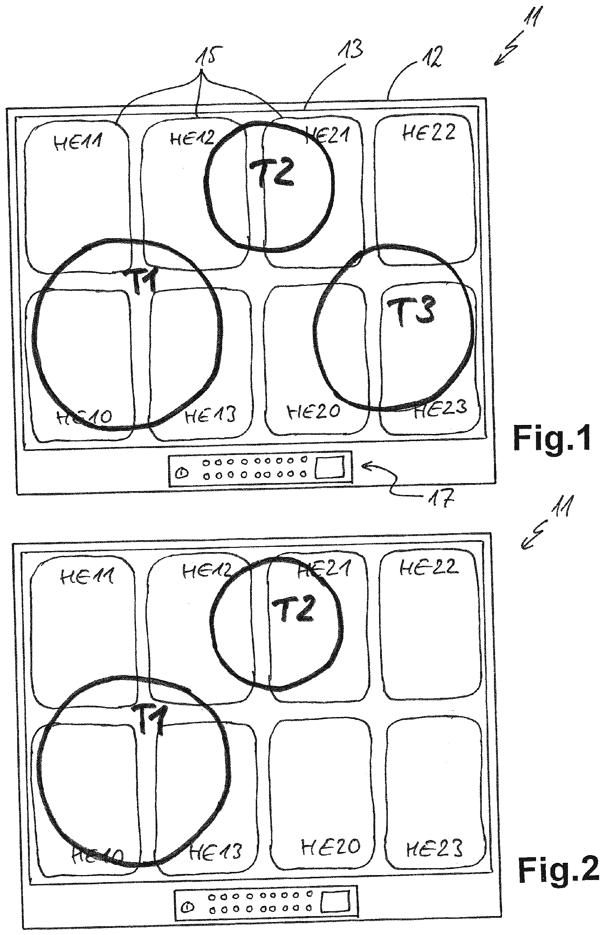

In der Fig. 1 ist ein Kochfeld 11 dargestellt, dass als Induktionskochfeld ausgebildet ist und unter einer Kochfeldplatte 12 in einem großen Heizbereich 13 acht Induktionsheizspulen 15 in jeweils gleicher Größe und regelmäßiger Anordnung aufweist. Die Induktionsheizspulen 15 bilden die eingangs genannten Heizeinrichtungen und sind durchnummeriert mit HE10 bis HE23. Diese Durchnummerierung ist in eine linke Hälfte und in eine rechte Hälfte unterteilt, da jeweils die linken vier Induktionsheizspulen 15 und die rechten vier Induktionsheizspulen 15 zu einem eigenen Modul gehören. Das Kochfeld 11 weist also zwei solche Module auf. Dies ist aber grundsätzlich aus dem Stand der Technik bekannt und braucht hier nicht weiter erläutert zu werden. Jede der Induktionsheizspulen 15 kann an sich eigenständig und beliebig angesteuert bzw. mit Leistung beaufschlagt werden zum Beheizen, natürlich in den Maßgaben des hier beschriebenen erfindungsgemäßen Verfahrens.

Vor dem Heizbereich 13 ist eine an sich aus dem Stand der Technik bekannte Bedieneinrichtung 17 am Kochfeld 11 vorgesehen. Sie weist eine Vielzahl von Bedienelementen auf, insbesondere für eine Leistungseinstellung bzw. zum Einstellen von Soll-Leistungswerten. Ebenso ist im rechten Bereich eine Anzeige vorgesehen, an der die jeweiligen Leistungswerte, insbesondere die Ist-Leistungen, der einzelnen Heizeinrichtungen bzw. Heizzonen, die von mehreren Heizeinrichtungen für einen Topf als Kochgefäß gebildet werden, angezeigt werden können.

In der Fig. 1 sind drei Töpfe T1 bis T3 als Kochgefäße auf das Kochfeld 11 aufgestellt. Der Topf T1 bedeckt die Induktionsheizspulen HE10 bis HE13, wobei er die Induktionsheizspule HE10 weitgehend bedeckt bzw. mit etwa 80% ihrer Fläche, die Induktionsheizspule HE11 mit etwa 15% ihrer Fläche, die Induktionsheizspule HE12 mit etwa 8% ihrer Fläche und die Induktionsheizspule HE13 mit etwa 60% ihrer Fläche. Der Topf T2 bedeckt die Induktionsheizspule HE12 mit etwa 30% ihrer Fläche und die Induktionsheizspule HE21 mit etwa 50% ihrer Fläche. Der Topf T3 bedeckt die Induktionsheizspule HE20 mit etwa 40% ihrer Fläche, die Induktionsheizspule HE21 mit etwa 3% ihrer Fläche, die Induktionsheizspule HE22 mit 8% ihrer Fläche und die Induktionsheizspule HE23 mit 75% ihrer Fläche. Diese relativen Bedeckungen werden erfasst und im Folgenden verwendet, um daraus sowie aus den jeweiligen Soll-Leistungsstufen eine Leistungseinstellung für die Induktionsheizspulen vorzunehmen.

Für die eingangs genannten Leistungsstufen des Kochfelds 11 von 0 bis 9 samt Boost-Leistungsstufe Boost sind die zugehörigen relativen Leistungen und Leistungsdichten in der folgenden Tabelle 1 dargestellt:

**Tabelle 1:**

| **Leistungsstufe** | **relative Leistung [%]** | **Leistungsdichte [W/cm²]** |
|---|---|---|
| 0 | 0 | 0,00 |
| 1 | 2,5 | 0,18 |
| 2 | 5 | 0,36 |
| 3 | 7,5 | 0,54 |
| 4 | 12,5 | 0,90 |
| 5 | 18 | 1,30 |
| 6 | 24 | 1,73 |
| 7 | 45 | 3,24 |
| 8 | 60 | 4,32 |
| 9 | 100 | 7,20 |
| Boost | 150 | 10,80 |

Für eine Induktionsspule mit einem Konflikt, die mit geringer Leistungsdichte betrieben werden soll, gilt, dass sich die Gesamtleistung des Topfes um maximal 5% ändern darf. Bei beispielsweise 10% relativer Bedeckung der Induktionsspule bedeutet dies dann, dass sie mit einer um bis zu 50% höheren Leistung bzw. Leistungsdichte betrieben werden darf. Das Akzeptanzkriterium für eine Abweichung der Leistung kann -12% betragen oder weniger als 50 Watt als absolute Leistung. Dies entspricht dann einer Leistungsdichteabweichung von -40% auf einer Induktionsspule mit Konflikt, die 33% relative Bedeckung aufweist.

Für die Fig. 1 gilt, dass für deren Töpfe T1 bis T3 die folgenden Soll-Leistungswerte vorgesehen sind, die in der Tabelle 2 angegeben sind, welche Soll-Leistungswerte für die aufgestellten Töpfe T1 bis T3 gelten und welche Leistungen in Watt sich daraus ergeben in der ersten vollständigen Spalte. In den nachfolgenden Spalten sind die Leistungsdichten angegeben. Daraus ist zu erkennen, weil der Topf T2 nicht beheizt werden soll bzw. für ihn die Soll-Leistungsstufe 0 und somit auch der Soll-Leistungswert 0 eingestellt ist, dass die Induktionsheizspulen HE12 und HE21 ausgeschaltet sein müssen. Dies wirkt sich dann auf die jeweils betriebenen anderen Induktionsheizspulen aus, die von den Töpfen T1 und T3 bedeckt werden.

**Tabelle 2: Topf 1 (= T1) mit hoher Soll-Leistungsstufe, Topf 2 (= T2) mit Soll-Leistungsstufe 0, Topf 3 (= T3) mit hoher Soll-Leistungsstufe**

| | | identifiziertes HE aus | an | an | aus | an | an | aus | an | an | | | |
|---|---|---|---|---|---|---|---|---|---|---|---|---|---|
| **Aufgestellte Töpfe** | **Soll-Leistungsstufe** | **P_TI_soll** | **P/A_HE10** | **P/A_HE11** | **P/A_HE12** | **P/A_HE13** | **P/A_HE20** | **P/A_HE21** | **P/A_HE22 E22** | **P/A_HE22 E23** | | | |
| T1 | 9 | 2736 | 7,43 | 7,92 | 0,00 | 7,68 | | 0,00 | | | | | |
| T2 | 0 | 0 | | | 0,00 | | | 0,00 | | | | | |
| T3 | 8 | 1253 | | | 0,00 | | 4,54 | 0,00 | 6,24 | 4,36 | | | |
| | | P/A_Min | 7,43 | 7,92 | 0,00 | 7,68 | 4,54 | 0,00 | 6,24 | 4,36 | | | |
| | | P/A_Max | 7,43 | 7,92 | 0,00 | 7,68 | 4,54 | 0,00 | 6,24 | 4,36 | | | |
| | | Konflikt | NEIN | NEIN | NEIN | NEIN | NEIN | EIN | NEIN | NEIN | | | |
| | | A_min | | | | | | | | | | | |
| | | P_min_Plus | | | | | | | | | | | |
| | | **P/A_Min_korr** | **7,43** | **7,92** | **0,00** | **7,68** | **4,54** | **0,00** | **6,24** | **4,36** | | | |
| | | A_max | | | | | | | | | | | |

| | **Leistungswert** | **P_korr** | **P_HE10** | **P_HE11** | **P_HE12** | **P_HE13** | **P_HE20** | **P_HE21** | **P_HE22** | **P_HE23** | **P_fehl** | **P_fehl** | **Akzeptiert** |
|---|---|---|---|---|---|---|---|---|---|---|---|---|---|
| T1 | | 2517 | 1231 | 438 | 0 | 848 | 0 | 0 | 0 | 0 | 219 | -8,0% | JA |
| T2 | | 0 | 0 | 0 | 0 | 0 | 0 | 0 | 0 | 0 | 0 | 0,0% | JA |
| T3 | | 1165 | 0 | 0 | 0 | 0 | 401 | 0 | 138 | 626 | 88 | -7,0% | JA |
| | | P_Hej | 1231 | 438 | 0 | 848 | 401 | 0 | 138 | 626 | | | |

Unten rechts in der Tabelle 2 ist zu ersehen, dass der Topf T1 mit 219 Watt weniger bzw. mit 8% weniger Leistung beheizt wird als eigentlich gewünscht. Dies kommt eben daher, dass die Induktionsheizspule HE12 nicht betrieben werden darf, da sie auch von dem Topf T2 mit der Soll-Leistungsstufe 0 bedeckt wird. Die relativ gering bedeckten Induktionsheizspulen HE11 und HE13 versuchen dies für den Topf T1 auszugleichen durch eine etwas höhere Leistungsdichte, was aber nicht vollständig erfolgt bzw. erfolgen soll. Der Topf T3 wird ebenfalls etwas geringer beheizt, nämlich mit 88 Watt bzw. 7% weniger als eigentlich vorgegeben worden ist. Aus den Leistungsdichten der Tabelle 2 ist zu erkennen, dass die Leistungsdichten jeweils höher als die eigentliche Leistungsdichte entsprechend der Leistungsstufe 8 gewählt sind für die Induktionsheizspulen HE20, HE22 und HE23. Dabei müssen auch die von den Töpfen T1 und T3 bedeckten Spalte bzw. Leerflächen zwischen den einzelnen Induktionsheizspulen 15 ausgeglichen werden. Für die Induktionsheizspule HE22 zum Beispiel erfolgt eine relativ starke Erhöhung der Leistungsdichte um über 40%. Da ihre flächenmäßige Bedeckung aber relativ gering ist, reicht dies eben nicht um eine etwas geringere Beheizung zu vermeiden.

Somit werden beide Töpfe T1 und T3 etwas geringer beheizt als vorgegeben. Dies hält sich aber in einem vertretbaren Rahmen, wie am prozentuellen Wert erkannt werden kann.

Eigentlich müsste an den beiden Induktionsheizspulen HE12 und HE21 ein Konflikt vorliegen. Beide werden jeweils von zwei Töpfen bedeckt, die unterschiedliche Soll-Leistungsstufen haben. Da diese beiden Induktionsheizspulen aber wegen der Soll-Leistungsstufe 0 für den Topf T2 gar nicht beheizt bzw. aktiviert werden dürfen, tritt der Konflikt dann doch nicht real auf.

In der Fig. 1 sind vorgenannte Topferkennungssensoren, beispielsweise entsprechend der EP 3026981 A1, nicht dargestellt. Sie sollten aber vorgesehen ein um die genaue Position der Töpfe zu erkennen und auch ihre Größe. So kann auch die jeweilige Bedeckung der Induktionsheizspulen erfasst werden.

In der Fig. 2 ist der Topf T3 aus Fig. 1 entfernt, die Töpfe T1 und T2 bedecken aber wie zuvor die jeweiligen Induktionsheizspulen. In diesem Fall soll der Topf T1 mit einem niedrigen Soll-Leistungswert betrieben werden, nämlich mit 1 als Soll-Leistungsstufe, und der Topf T2 ebenfalls, und zwar mit 2 als Soll-Leistungsstufe.

**Tabelle 4: Topf 1 (= T1) mit niedriger Soll-Leistungsstufe, Topf 2 (= T2) mit hoher Soll-Leistungsstufe**

| | | | | | | | | | | | | | |
|---|---|---|---|---|---|---|---|---|---|---|---|---|---|
| | | identifiziertes HE_aus | an | an | an | an | aus | an | aus | aus | | | |
| **Aufgestellte Töpfe** | **Soll-Leistungsstufe** | **P_TI_soll** | **P/A_HE10** | **P/A_HE11** | **P/A_HE12** | **P/A_HE13** | **P/A_HE20** | **P/A_HE21** | **P/A_HE22 E22** | **P/A_HE22 E23** | | | |
| T1 | 1 | 68 | 0,19 | 0,20 | 0,25 | 0,19 | 0,00 | 0,00 | 0,00 | 0,00 | | | |
| T2 | 9 | 1296 | | | 8,21 | | 0,00 | 8,21 | 0,00 | 0,00 | | | |
| | | P/A_Min | 0,19 | 0,20 | 0,25 | 0,19 | 0,00 | 8,21 | 0,00 | 0,00 | | | |
| | | P/A_Max | 0,19 | 0,20 | 8,21 | 0,19 | 0,00 | 8,21 | 0,00 | 0,00 | | | |
| | | Konflikt | NEIN | NEIN | JA | NEIN | NEIN | NEIN | NEIN | NEIN | | | |
| | | A_min | | | 6% | | | | | | | | |
| | | P_min_Plus | | | 1,80 | | | | | | | | |
| | | **P/A_Min_korr** | **0,19** | **0,20** | **0,45** | **0,19** | **0,00** | **0,20** | **0,00** | **0,00** | | | |
| | | A_max | | | 33% | | | | | | | | |

| | **Leistungswert** | **P_korr** | **P_HE10** | **P_HE11** | **P_HE12** | **P_HE13** | **P_HE20** | **P_HE21** | **P_HE22** | **P_HE23** | **P_fehl** | **P_fehl** | **Akzeptiert** |
|---|---|---|---|---|---|---|---|---|---|---|---|---|---|
| T1 | | 73 | 31 | 11 | 10 | 21 | 0 | 0 | 0 | 0 | -5 | 6,4% | JA |
| T2 | | 50 | 0 | 0 | 25 | 0 | 0 | 25 | 0 | 0 | 1246 | -96,2% | NEIN |
| | | P_Hej | 31 | 11 | 35 | 21 | 0 | 25 | 0 | 0 | | | |

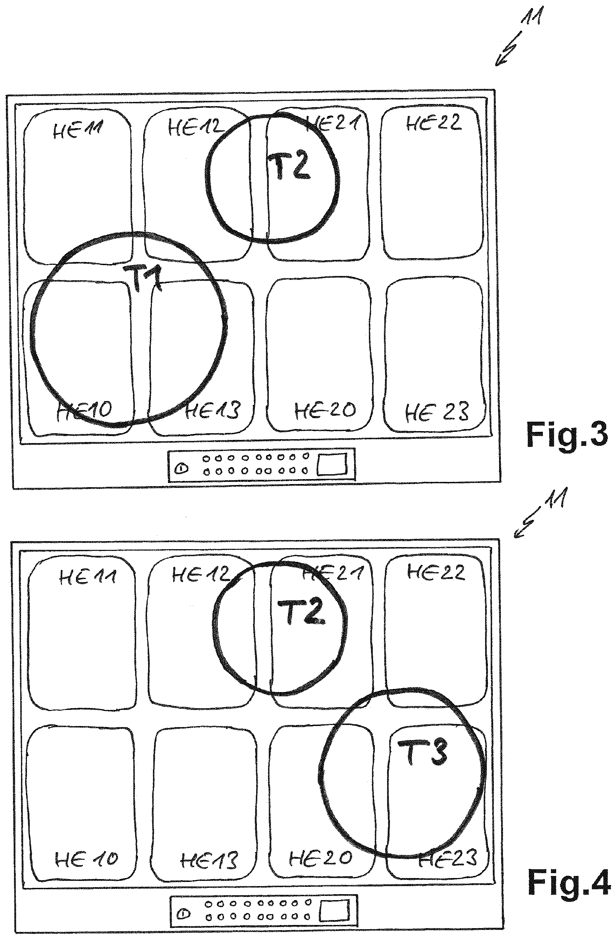

In der Fig. 3 entsprechend Tabelle 4 liegt dieselbe Aufstellsituation der Töpfe T1 und T2 vor wie in Fig. 2, nur dass hier der Topf T1 mit einem niedrigen Soll-Leistungswert 1 und der Topf T2 mit einem hohen Soll-Leistungswert 9 beheizt werden soll. Ganz offensichtlich liegt wieder an der Induktionsheizspule HE12 ein Konflikt vor. Diesmal gibt es eine extreme Diskrepanz zwischen den Soll-Leistungsstufen und -werten der beiden Töpfe T1 und T2, wie sie an der Induktionsheizspule HE12 mit dem Konflikt vorliegen. Da die Ist-Leistung der Induktionsheizspule HE12 wegen der Bedeckung durch den Topf T1, auch wenn diese gering ist, aber doch über einem eingangs beschriebenen Wert für eine Mindest-Bedeckung liegt, nicht sehr groß sein darf, muss die Ist-Leistung für die Induktionsheizspule HE12 stark verringert werden. Gleiches gilt für die Induktionsheizspule HE12, die zwar keinen Konflikt hat, aber wegen einer gewünschten homogenen Beheizung des Topfes T2 mit derselben oder einer ähnlichen Leistungsdichte betrieben werden muss.

Somit ist erkennbar, dass der Topf T1 etwas stärker beheizt wird als gewünscht, was aber kaum ins Gewicht fällt. Der Topf T2 würde dagegen massiv geringer beheizt, was hier aber nicht anders möglich wäre. Deswegen wird diese Leistungseinstellung aber nicht akzeptiert. Eine Bedienperson müsste aufgefordert werden, die Töpfe T anders aufzustellen, insbesondere Topf T2 weiter nach rechts zu verschieben, so dass er nicht mehr die Induktionsheizspule HE21 bedeckt. Dann wäre kein Konflikt mehr gegeben.

**Tabelle 5: Topf 2 (= T2) mit hoher Soll-Leistungsstufe, Topf 3 (= T3) mit mittlerer Soll-Leistungsstufe**

| | | | | | | | | | | | | | |
|---|---|---|---|---|---|---|---|---|---|---|---|---|---|
| | | identifiziertes HE_aus | an | an | an | an | an | an | an | an | | | |
| **Aufgestellte Töpfe** | **Soll-Leistungsstufe** | **P_TI_soll** | **P/A_HE10** | **P/A_HE11** | **P/A_HE12** | **P/A_HE13** | **P/A_HE20** | **P/A_HE21** | **P/A_HE22 E22** | **P/A_HE22 E23** | | | |
| T2 | 6 | 311 | | | 1,97 | | | 1,83 | | | | | |
| T3 | 4 | 261 | | | | | 0,94 | 1,65 | 1,3 | 0,91 | | | |
| | | P/A_Min | 0,00 | 0,00 | 1,97 | 0,00 | 0,94 | 1,65 | 1,3 | 0,91 | | | |
| | | P/A_Max | 0,00 | 0,00 | 1,97 | 0,00 | 0,94 | 1,83 | 1,3 | 0,91 | | | |
| | | Konflikt | NEIN | NEIN | NEIN | NEIN | NEIN | JA | NEIN | NEIN | | | |
| | | A_min | | | | | | 4% | | | | | |
| | | P_min_Plus | | | | | | 1,00 | | | | | |
| | | **P/A_Min_korr** | **0,00** | **0,00** | **1,97** | **0,00** | **0,94** | **1,65** | **1,3** | **0,91** | | | |
| | | A_max | | | | | | 67% | | | | | |

| | **Leistungswert** | **P_korr** | **P_HE10** | **P_HE11** | **P_HE12** | **P_HE13** | **P_HE20** | **P_HE21** | **P_HE22** | **P_HE23** | **P_fehl** | **P_fehl** | **Akzeptiert** |
|---|---|---|---|---|---|---|---|---|---|---|---|---|---|
| T2 | | 292 | 0 | 0 | 109 | 0 | 0 | 183 | 0 | 0 | 19 | 6,3% | JA |
| T3 | | 261 | 0 | 0 | 0 | 0 | 84 | 18 | 29 | 130 | 0 | 0,0% | JA |
| | | P_Hej | 0 | 0 | 109 | 0 | 84 | 201 | 29 | 130 | | | |

In der Fig. 4 sind nur die Töpfe T2 und T3 entsprechend Fig. 1 auf das Kochfeld 11 aufgestellt. Aus der zugehörigen Tabelle 5 ergibt sich, dass an der Induktionsheizspule HE21 ein Konflikt vorliegt, da der Topf 2 mit einer hohen Soll-Leistungsstufe 6 beheizt werden soll, der Topf 3 aber nur mit einer mittleren Soll-Leistungsstufe 4. Dies führt dann dazu, dass der Topf T2 etwas stärker beheizt wird, der Topf T3 genau wie vorgegeben. Für beide wird es akzeptiert. Beim stärker zu beheizenden Topf T2 ist dies nicht sehr störend bzw. fällt einer Bedienperson nicht auf.

Die weiteren Möglichkeiten bei der Durchführung von Verfahren zum Betrieb des Kochfelds 11, die zuvor beschrieben worden sind wie beispielsweise verschiedene Mindest-Bedeckungen, Berechnung der Ist-Leistung abhängig von der Bedeckung einer gemeinsamen Induktionsheizspule durch mehrere Kochgefäße oder auch die Rückmeldung an eine Bedienperson in verschiedenen Fällen, auch der Änderung einer Ist-Leistung gegenüber einer eingegebenen Soll-Leistungsstufe, sind leicht vorstellbar und zuvor ausreichend erläutert worden. Sie brauchen nicht noch einmal mit Bezug zu den Figuren erläutert zu werden.

## Patentansprüche

1. Verfahren zum Betrieb eines Kochfelds (11), wobei das Kochfeld (11) mehrere nebeneinander und hintereinander angeordnete Induktionsheizspulen (15, HE) in einem Heizbereich (13) aufweist, mit den Schritten:
- für ein erstes Kochgefäß (T1) ist oder wird ein erster Soll-Leistungswert vorgegeben, mit dem das erste Kochgefäß (T1) beheizt werden soll mittels mindestens einer der Induktionsheizspulen (15, HE10 bis HE13), die von dem ersten Kochgefäß (T1) bedeckt wird, so dass der erste Soll-Leistungswert für die von dem ersten Kochgefäß (T1) bedeckten Induktionsheizspulen (15, HE10 bis HE13) gelten soll,
- für ein zweites Kochgefäß (T2) ist oder wird ein zweiter Soll-Leistungswert vorgegeben, mit dem das zweite Kochgefäß (T2) beheizt werden soll mittels mindestens einer der Induktionsheizspulen (15, HE12, HE21), die von dem zweiten Kochgefäß (T2) bedeckt wird, so dass der zweite Soll-Leistungswert für die von dem zweiten Kochgefäß (T2) bedeckten Induktionsheizspulen (15, HE12, HE21) gelten soll,
- Überprüfen, ob das erste Kochgefäß (T1) und das zweite Kochgefäß (T2) eine Induktionsheizspule (15, HE12) gemeinsam zumindest teilweise bedecken,
- aus einem Soll-Leistungswert für ein Kochgefäß (T1, T2) wird eine Soll-Leistung für eine von dem Kochgefäß (T1, T2) bedeckte Induktionsheizspule (15, HE10 bis HE23, HE21) berechnet und aus einem Ist-Leistungswert für ein Kochgefäß (T1, T2) wird eine Ist-Leistung für eine von dem Kochgefäß (T1, T2) bedeckte Induktionsheizspule (15, HE10 bis HE23, HE21) berechnet,
- für den Fall, dass das erste Kochgefäß (T1) und das zweite Kochgefäß (T2) eine gemeinsame Induktionsheizspule (15, HE12) gemeinsam bedecken und sich der erste Soll-Leistungswert und der zweite Soll-Leistungswert unterscheiden, wird überprüft, wie groß die erste relative Bedeckung dieser gemeinsamen Induktionsheizspule (15, HE12) durch das erste Kochgefäß (T1) ist und wie groß die zweite relative Bedeckung dieser gemeinsamen Induktionsheizspule (15, HE12) durch das zweite Kochgefäß (T2) ist, wobei abhängig von diesen beiden relativen Bedeckungen eine Ist-Leistung der gemeinsamen Induktionsheizspule (15, HE12) zu deren tatsächlichem Betrieb entsprechend einem Ist-Leistungswert niedriger als der höhere der beiden Soll-Leistungswerte bestimmt wird, so dass mindestens eines der beiden Kochgefäße (T1, T2) durch die gemeinsame Induktionsheizspule (15, HE12) mit einem anderen als dem für dieses Kochgefäß (T1, T2) vorgegebenen Soll-Leistungswert beheizt wird,
**dadurch gekennzeichnet, dass** eine kleine relative Bedeckung der gemeinsamen Induktionsheizspule (15, HE12) durch das Kochgefäß (T1) mit dem niedrigeren Soll-Leistungswert zu einer stärkeren Erhöhung der Ist-Leistung der gemeinsamen Induktionsheizspule (15, HE12) über den entsprechenden niedrigeren Soll-Leistungswert führt als eine große relative Bedeckung der gemeinsamen Induktionsheizspule (15, HE) durch das Kochgefäß (T1) mit dem niedrigeren Soll-Leistungswert.

2. Verfahren nach Anspruch 1, **dadurch gekennzeichnet, dass** überprüft wird, ob das erste Kochgefäß (T1) und das zweite Kochgefäß (T2) jeweils die gemeinsame Induktionsheizspule (15, HE12) zumindest mit einer ersten absoluten Mindest-Bedeckung bedecken, wobei vorzugsweise die erste absolute Mindest-Bedeckung 5% der Fläche der Induktionsheizspule (15, HE12) beträgt, wobei nur Bedeckungen von mindestens der ersten absoluten Mindest-Bedeckung berücksichtigt werden für eine Beheizung und eine geringere Bedeckung unberücksichtigt bleibt so wie wenn es gar keine Bedeckung wäre.

3. Verfahren nach Anspruch 1 oder 2, **dadurch gekennzeichnet, dass** für den Fall, dass das erste Kochgefäß (T1) oder das zweite Kochgefäß (T2) die gemeinsame Induktionsheizspule (15, HE12) mit weniger als einer zweiten absoluten Mindest-Bedeckung von 10% bis 20% bedecken, und dass für beide Kochgefäße (T1, T2) ein Soll-Leistungswert größer als Null vorgegeben ist, die gemeinsame Induktionsheizspule (15, HE12) mit derjenigen Soll-Leistung als Ist-Leistung betrieben wird, die einem Soll-Leistungswert entspricht, der für dasjenige Kochgefäß (T2) vorgegeben ist, das die gemeinsame Induktionsheizspule (15, HE12) mit der größeren Mindest-Bedeckung bedeckt.

4. Verfahren nach einem der vorhergehenden Ansprüche, **dadurch gekennzeichnet, dass** für den Fall, dass für eines der beiden Kochgefäße (T2) der Soll-Leistungswert Null vorgegeben ist bzw. dass dieses Kochgefäß (T2) nicht beheizt werden soll, für die gemeinsame Induktionsheizspule (15, HE12) ebenfalls die Ist-Leistung Null vorgegeben wird bzw. diese gemeinsame Induktionsheizspule (15, HE12) nicht betrieben wird, wobei vorzugsweise andere Induktionsheizspulen (15, HE10, HE11, HE13), die von dem Kochgefäß (T1) mit dem Soll-Leistungswert größer Null bedeckt werden, mit einer erhöhten Ist-Leistung betrieben werden, insbesondere so hoch, dass die wegfallende Soll-Leistung der gemeinsamen Induktionsheizspule (15, HE12) kompensiert wird.

5. Verfahren nach einem der vorhergehenden Ansprüche, **dadurch gekennzeichnet, dass** abhängig von den beiden relativen Bedeckungen eine Ist-Leistung der gemeinsamen Induktionsheizspule (15, HE12) zu deren tatsächlichem Betrieb nicht niedriger als bzw. mindestens so hoch wie entsprechend des niedrigeren der beiden Soll-Leistungswerte bestimmt wird, wobei vorzugsweise die Ist-Leistung höher als entsprechend des niedrigeren der beiden Soll-Leistungswerte bestimmt wird.

6. Verfahren nach einem der vorhergehenden Ansprüche, **dadurch gekennzeichnet, dass** bei einer relativen Bedeckung der gemeinsamen Induktionsheizspule (15, HE12) von bis zu 10% durch das Kochgefäß (T1) mit dem niedrigeren Soll-Leistungswert die Ist-Leistung der gemeinsamen Induktionsheizspule (15, HE) maximal so weit über eine Soll-Leistung entsprechend dem niedrigeren Soll-Leistungswert erhöht wird, dass die Ist-Leistung der gemeinsamen Induktionsheizspule (15, HE12) um maximal 60% erhöht wird, wobei vorzugsweise bei einer relativen Bedeckung der gemeinsamen Induktionsheizspule (15, HE12) von über 30% durch das Kochgefäß (T1) mit dem niedrigeren Soll-Leistungswert die Ist-Leistung der gemeinsamen Induktionsheizspule (15, HE12) maximal so weit entsprechend über den niedrigeren Soll-Leistungswert erhöht wird, dass die Ist-Leistung der gemeinsamen Induktionsheizspule (15, HE) um maximal 20% erhöht wird.

7. Verfahren nach einem der vorhergehenden Ansprüche, **dadurch gekennzeichnet, dass** bei einer relativen Bedeckung der gemeinsamen Induktionsheizspule (15, HE) zwischen 10% und 30% durch das Kochgefäß (T1) mit dem niedrigeren Soll-Leistungswert die entsprechende Ist-Leistung der gemeinsamen Induktionsheizspule (15, HE12) aus den Beschränkungen bei 10% und 30% stetig, vorzugsweise monoton steigend, berechnet wird.

8. Verfahren nach einem der vorhergehenden Ansprüche, **dadurch gekennzeichnet, dass** die resultierende Leistungsreduzierung für das Kochgefäß (T2) mit dem höheren Soll-Leistungswert berechnet wird und bei Überschreiten einer Abweichung von betragsmäßig größer als 12% oder einem gesamten Unterschied der Leistung von mindestens 50W der Soll-Leistungswert für dieses Kochgefäß (T2) so reduziert wird, dass die entsprechende Ist-Leistung der gemeinsamen Induktionsheizspule (15, HE12) um maximal 20% unter den entsprechenden Soll-Leistungswert verringert wird, vorzugsweise die Ist-Leistung um maximal 17% verringert wird.

9. Verfahren nach einem der vorhergehenden Ansprüche, **dadurch gekennzeichnet, dass** beim Einstellen oder Verstellen der Ist-Leistung einer Induktionsheizspule (15, HE) entsprechend einem Ist-Leistungswert eines bedeckenden Kochgefäßes (T) bzw. einem Ist-Leistungswert für ein Kochgefäß (T) eine Rückmeldung an eine Bedienperson gegeben wird, um eine Änderung der Einstellung des Leistungswerts zu erkennen, wobei insbesondere eine Anzeige einer optischen Rückmeldung sowohl den vorgegebenen Soll-Leistungswert anzeigt als auch einen geänderten Ist-Leistungswert anzeigt, vorzugsweise im Wechsel und/oder mit unterschiedlicher Größe und/oder Helligkeit, wobei insbesondere der geänderte Ist-Leistungswert größer und/oder heller als der vorgegebene Soll-Leistungswert angezeigt wird.

10. Verfahren nach einem der vorhergehenden Ansprüche, **dadurch gekennzeichnet, dass** an eine Bedienperson eine optische und/oder akustische Rückmeldung gegeben wird, wenn ein Kochgefäß (T) so weit verschoben worden ist, dass eine Induktionsheizspule (15, HE) nicht mehr von zwei Kochgefäßen (T) gemeinsam bedeckt wird, insbesondere nicht mehr mit einer Mindestbedeckung, wobei vorzugsweise im ersten Fall wieder eine höhere Leistungswerteinstellung bzw. eine beliebige Leistungswerteinstellung möglich ist.

11. Verfahren nach einem der vorhergehenden Ansprüche, **dadurch gekennzeichnet, dass** an eine Bedienperson eine optische und/oder akustische Rückmeldung gegeben wird, wenn ein Soll-Leistungswert für eines der Kochgefäße (T) auf der gemeinsamen Induktionsheizspule (15, HE) derart verändert wurde, dass die gemeinsame Induktionsheizspule (15, HE) nicht mehr von zwei Kochgefäßen (T) mit unterschiedlichen Soll-Leistungswerten bedeckt ist, wobei vorzugsweise dann die Induktionsheizspulen (15, HE), die von den Kochgefäßen (T) bedeckt werden, mit einer Ist-Leistung entsprechend den jeweils vorgegebenen Soll-Leistungswerten betrieben werden.

12. Verfahren nach einem der vorhergehenden Ansprüche, **dadurch gekennzeichnet, dass** nach Einstellen oder Verstellen der Ist-Leistung der gemeinsamen Induktionsheizspule (15, HE12), vorzugsweise zusammen mit der Anzeige des Einstellens oder Verstellens nach Anspruch 8 oder 9, das Kochgefäß (T1) mit dem niedrigeren Ist-Leistungswert beheizt wird, wobei für den Fall, dass innerhalb einer Zeit von maximal 20 sec, mindestens ein Kochgefäß (T) derart bewegt wird, dass es die gemeinsame Induktionsheizspule (15, HE12) nicht mehr mit der Mindest-Bedeckung nach Anspruch 2 bedeckt, eine Änderung eines Soll-Leistungswerts eines Kochgefäßes (T) oder einer Soll-Leistung einer Induktionsheizspule (15, HE) nicht mehr erfolgt, wobei daraufhin automatisch die Kochgefäße (T) mit ihren jeweils vorgegebenen Soll-Leistungswerten und die Induktionsheizspulen (15, HE) mit ihren jeweils vorgegebenen Soll-Leistungen beheizt werden.

13. Verfahren nach einem der vorhergehenden Ansprüche, **dadurch gekennzeichnet, dass** eine Erhöhung der Ist-Leistung für die gemeinsame Induktionsheizspule (15, HE12) entsprechend über den niedrigere Soll-Leistungswert maximal so groß ist, dass die gesamte Ist-Leistung, die von allen von dem entsprechenden Kochgefäß (T1, T2) bedeckten Induktionsheizspulen (15, HE12) gemeinsam erzeugt wird, um maximal 2% bis 10% erhöht wird, vorzugsweise um maximal 5%.

14. Verfahren nach einem der vorhergehenden Ansprüche, **dadurch gekennzeichnet, dass** eine Induktionsheizspule (15, HE10, HE11, HE13), die nur von einem einzigen Kochgefäß (T1, T2) bedeckt wird, das auch noch die gemeinsame Induktionsheizspule (15, HE12) bedeckt, mit einer Ist-Leistung betrieben wird, die entsprechend nicht über dem Soll-Leistungswert dieses Kochgefäßes (T1, T2) liegt, vorzugsweise unter dem Soll-Leistungswert liegt, wenn die gemeinsame Induktionsheizspule (15, HE12) mit einer niedrigeren Ist-Leistung betrieben wird.

15. Verfahren nach einem der vorhergehenden Ansprüche, **dadurch gekennzeichnet, dass** die Induktionsheizspulen (15, HE) zumindest teilweise dazu dienen, eine Position eines aufgesetzten Kochgefäßes (T) sowie dessen Größe zu erkennen, wobei vorzugsweise zusätzliche Topferkennungssensoren verwendet werden mit einer Verteilung in einem Raster, welches enger ist als dasjenige der Anordnung der Induktionsheizspulen (15, HE) und/oder zwischen den Induktionsheizspulen (15, HE) zumindest teilweise Topferkennungssensoren vorgesehen sind, wobei insbesondere mindestens ein Topferkennungssensor zwischen zwei seitlich nebeneinander angeordneten Induktionsheizspulen (15, HE) angeordnet ist und mindestens ein Topferkennungssensor zwischen zwei hintereinander angeordneten Induktionsheizspulen (15, HE) angeordnet ist.

## Claims

1. Method for operating a hob (11), wherein the hob (11) has a plurality of induction heating coils (15, HE) arranged adjacent and one behind the other in a heating zone (13), having the steps of:
- for a first cooking vessel (T1), a first nominal power value has been or is specified, with which the first cooking vessel (T1) is to be heated by way of at least one of the induction heating coils (15, HE10 to HE13) which is covered by the first cooking vessel (T1), such that the first nominal power value is to apply for the induction heating coils (15, HE10 to HE13) covered by the first cooking vessel (T1),
- for a second cooking vessel (T2), a second nominal power value has been or is specified, with which the second cooking vessel (T2) is to be heated by way of at least one of the induction heating coils (15, HE12, HE21) which is covered by the second cooking vessel (T2), such that the second nominal power value is to apply for the induction heating coils (15, HE12, HE21) covered by the second cooking vessel (T2),
- checking whether the first cooking vessel (T1) and the second cooking vessel (T2) are jointly covering an induction heating coil (15, HE12) at least in part,
- on the basis of a nominal power value for a cooking vessel (T1, T2), a nominal power for an induction heating coil (15, HE10 to HE23, HE21) covered by the cooking vessel (T1, T2) is calculated and, on the basis of an actual power value for a cooking vessel (T1, T2), an actual power for an induction heating coil (15, HE10 to HE23, HE21) covered by the cooking vessel (T1, T2) is calculated,
- in the event that the first cooking vessel (T1) and the second cooking vessel (T2) are jointly covering a common induction heating coil (15, HE12) and the first nominal power value and the second nominal power value differ, the extent of the first relative coverage of this common induction heating coil (15, HE12) by the first cooking vessel (T1) and the extent of the second relative coverage of this common induction heating coil (15, HE12) by the second cooking vessel (T2) are checked, wherein, as a function of these two relative coverages, an actual power of the common induction heating coil (15, HE12) for the actual operation thereof is determined corresponding to an actual power value which is lower than the higher of the two nominal power values, such that at least one of the two cooking vessels (T1, T2) is heated by the common induction heating coil (15, HE12) with a nominal power value other than that specified for this cooking vessel (T1, T2), **characterized in that** a small relative coverage of the common induction heating coil (15, HE12) by the cooking vessel (T1) with the lower nominal power value leads to a greater increase in the actual power of the common induction heating coil (15, HE12) above the corresponding lower nominal power value than does a large relative coverage of the common induction heating coil (15, HE) by the cooking vessel (T1) with the lower nominal power value.

2. Method according to claim 1, **characterized in that** it is checked whether the first cooking vessel (T1) and the second cooking vessel (T2) are in each case covering the common induction heating coil (15, HE12) at least with a first absolute minimum coverage, wherein the first absolute minimum coverage preferably amounts to 5% of the area of the induction heating coil (15, HE12), wherein only coverages of at least the first absolute minimum coverage are taken into account for heating and a lower coverage is disregarded as if it were no coverage at all.

3. Method according to claim 1 or 2, **characterized in that**, in the event that the first cooking vessel (T1) or the second cooking vessel (T2) is covering the common induction heating coil (15, HE12) with less than a second absolute minimum coverage of 10% to 20%, and that for both cooking vessels (T1, T2) a nominal power value of greater than zero is specified, the common induction heating coil (15, HE12) is operated with that nominal power as the actual power which corresponds to a nominal power value which is specified for that cooking vessel (T2) which is covering the common induction heating coil (15, HE12) with the larger minimum coverage.

4. Method according to any of the preceding claims, **characterized in that**, in the event that a nominal power value of zero is specified for one of the two cooking vessels (T2) or that this cooking vessel (T2) is not to be heated, an actual power of zero is likewise specified for the common induction heating coil (15, HE12) or this common induction heating coil (15, HE12) is not operated, wherein preferably other induction heating coils (15, HE10, HE11, HE13), which are being covered by the cooking vessel (T1) with the nominal power value of greater than zero, are operated with an increased actual power, in particular of such a level that the nominal power not provided by the common induction heating coil (15, HE12) is compensated.

5. Method according to any of the preceding claims, **characterized in that**, as a function of the two relative coverages, an actual power of the common induction heating coil (15, HE12) for the actual operation thereof is determined which is no lower than or at least as high as corresponding to the lower of the two nominal power values, wherein the actual power is preferably determined higher than corresponding to the lower of the two nominal power values.

6. Method according to any of the preceding claims, **characterized in that**, at a relative coverage of the common induction heating coil (15, HE12) of up to 10% by the cooking vessel (T1) with the lower nominal power value, the actual power of the common induction heating coil (15, HE) is raised at most so far above a nominal power corresponding to the lower nominal power value that the actual power of the common induction heating coil (15, HE12) is raised by at most 60%, wherein, at a relative coverage of the common induction heating coil (15, HE12) of up to 30% by the cooking vessel (T1) with the lower nominal power value, the actual power of the common induction heating coil (15, HE12) is preferably raised correspondingly at most so far above the lower nominal power value that the actual power of the common induction heating coil (15, HE) is raised by at most 20%.

7. Method according to any of the preceding claims, **characterized in that**, at a relative coverage of the common induction heating coil (15, HE) of between 10% and 30% by the cooking vessel (T1) with the lower nominal power value, the corresponding actual power of the common induction heating coil (15, HE12) is calculated with a continuous, preferably monotonic, rise from the limitations at 10% and 30%.

8. Method according to any of the preceding claims, **characterized in that** the resultant power reduction for the cooking vessel (T2) with the higher nominal power value is calculated and, if it exceeds a deviation of greater than 12% in magnitude or a total difference in power of at least 50 W, the nominal power value for this cooking vessel (T2) is reduced such that the corresponding actual power of the common induction heating coil (15, HE12) is reduced by at most 20% below the corresponding nominal power value, the actual power preferably being reduced by at most 17%.

9. Method according to any of the preceding claims, **characterized in that**, on setting or adjusting the actual power of an induction heating coil (15, HE) to correspond to an actual power value of a covering cooking vessel (T) or an actual power value for a cooking vessel (T), feedback is provided to an operator in order to identify a modification to the setting of the power value, wherein a display of optical feedback in particular displays both the specified nominal power value and a modified actual power value, preferably alternately and/or in a different size and/or brightness, wherein in particular the modified actual power value is displayed larger and/or brighter than the specified nominal power value.

10. Method according to any of the preceding claims, **characterized in that** optical and/or acoustic feedback is provided to an operator when a cooking vessel (T) has been displaced to such an extent that an induction heating coil (15, HE) is no longer being jointly covered by two cooking vessels (T), in particular no longer with a minimum coverage, wherein preferably in the former case a higher power value setting or any power value setting is again possible.

11. Method according to any of the preceding claims, **characterized in that** optical and/or acoustic feedback is provided to an operator when a nominal power value for one of the cooking vessels (T) on the common induction heating coil (15, HE) has been modified in such a manner that the common induction heating coil (15, HE) is no longer being covered by two cooking vessels (T) with different nominal power values, wherein the induction heating coils (15, HE) which are being covered by the cooking vessels (T) are then preferably operated with an actual power corresponding to the respectively specified nominal power values.

12. Method according to any of the preceding claims, **characterized in that**, after setting or adjusting the actual power of the common induction heating coil (15, HE12), preferably together with display of the setting or adjustment according to claim 8 or 9, the cooking vessel (T1) is heated with the lower actual power value, wherein, in the event that, within a period of at most 20 sec, at least one cooking vessel (T) is moved such that it is no longer covering the common induction heating coil (15, HE12) with the minimum coverage according to claim 2, a nominal power value of a cooking vessel (T) or a nominal power of an induction heating coil (15, HE) is no longer modified, wherein the cooking vessels (T) are thereupon automatically heated with their respective specified nominal power values and the induction heating coils (15, HE) with their respectively specified nominal powers.

13. Method according to any of the preceding claims, **characterized in that** a corresponding increase in the actual power for the common induction heating coil (15, HE12) above the lower nominal power value is at most of such an extent that the total actual power jointly generated by the induction heating coils (15, HE12) covered by the corresponding cooking vessel (T1, T2) is raised by at most 2% to 10%, preferably by at most 5%.

14. Method according to any of the preceding claims, **characterized in that** an induction heating coil (15, HE10, HE11, HE13), which is covered by just one single cooking vessel (T1, T2) which also additionally covers the common induction heating coil (15, HE12), is operated with an actual power which, correspondingly, is not above the nominal power value of this cooking vessel (T1, T2), preferably is below the nominal power value when the common induction heating coil (15, HE12) is operated with a lower actual power.

15. Method according to any of the preceding claims, **characterized in that** the induction heating coils (15, HE) at least in part serve to detect a position and a size of a cooking vessel (T) which has been set down, wherein additional pan detection sensors are preferably used with a distribution in a grid which is tighter than that of the arrangement of the induction heating coils (15, HE) and/or pan detection sensors are provided between at least some of the induction heating coils (15, HE), wherein in particular at least one pan detection sensor is arranged between two induction heating coils (15, HE) arranged adjacent one another and at least one pan detection sensor is arranged between two induction heating coils (15, HE) arranged one behind the other.

## Revendications

1. Procédé pour le fonctionnement d'une plaque de cuisson (11), sachant que la plaque de cuisson (11) présente plusieurs bobines d'induction (15, HE) disposées les unes à côté des autres et les unes derrière les autres dans une zone de cuisson (13), comportant les étapes suivantes :
- est ou sera prédéterminé pour un premier récipient de cuisson (T1) une première valeur de puissance de consigne avec laquelle le premier récipient de cuisson (T1) doit être chauffé au moyen d'au moins une des bobines d'induction (15, HE10 à HE13) qui est recouverte par le premier récipient de cuisson (T1) de sorte que la première valeur de puissance de consigne doit s'appliquer aux bobines d'induction (15, HE10 à HE13) recouvertes par le premier récipient de cuisson (T1),
- est ou sera prédéterminé pour un second récipient de cuisson (T2) une seconde valeur de puissance de consigne avec laquelle le second récipient de cuisson (T2) doit être chauffé au moyen d'au moins une des bobines d'induction (15, HE12, HE21) qui est recouverte par le second récipient de cuisson (T2) de sorte que la seconde valeur de puissance de consigne doit s'appliquer aux bobines d'induction (15, HE12, HE21) recouvertes par le second récipient de cuisson (T2),
- vérification pour déterminer si le premier récipient (T1) et le second récipient de cuisson (T2) recouvrent ensemble au moins partiellement une bobine d'induction (15, HE12),
- est calculée à partir d'une valeur de puissance de consigne pour un récipient de cuisson (T1, T2) une puissance de consigne pour une bobine d'induction (15, HE10 à HE23, HE21) recouverte par le récipient de cuisson (T1, T2), et est calculée à partir d'une valeur de puissance réelle pour un récipient de cuisson (T1, T2) une puissance réelle pour une bobine d'induction (15, HE10 à HE23, HE21) recouverte par le récipient de cuisson (T1, T2),
- est vérifié, pour le cas où le premier récipient de cuisson (T1) et le second récipient de cuisson (T2) recouvrent ensemble une bobine d'induction commune (15, HE12) et que la première valeur de puissance de consigne et la seconde valeur de puissance de consigne se différencient, quelle est la taille du premier recouvrement relatif de cette bobine d'induction commune (15, HE12) par le premier récipient de cuisson (T1) et quelle est la taille du second recouvrement relatif de cette bobine d'induction commune (15, HE12) par le second récipient de cuisson (12), sachant qu'en fonction des deux recouvrements relatifs, une puissance réelle de la bobine d'induction commune (15, HE12) pour son exploitation réelle est déterminée de manière à être inférieure à la plus élevée des deux valeurs de puissance de consigne en correspondance avec une valeur de puissance réelle de sorte qu'au moins un des deux récipients de cuisson (T1, T2) est chauffé par le bobine d'induction commune (15, HE12) avec une autre valeur de puissance de consigne que celle prédéterminée pour ce récipient de cuisson (T1, T2), **caractérisé en ce qu'**un petit recouvrement relatif de la bobine d'induction commune (15, HE12) par le récipient de cuisson (T1) avec la valeur de puissance de consigne inférieure conduit à une hausse de la puissance réelle de la bobine d'induction commune (15, HE12), au-dessus de la valeur de puissance de consigne correspondante inférieure, qui est supérieure à un grand recouvrement relatif de la bobine d'induction commune (15, HE) par le récipient de cuisson (T1) avec la valeur de puissance de consigne inférieure.

2. Procédé selon la revendication 1, **caractérisé en ce qu'**est vérifié si le premier récipient de cuisson (T1) et le second récipient de cuisson (T2) recouvrent respectivement la bobine d'induction commune (15, HE12) au moins avec un premier recouvrement minimal absolu, sachant que de préférence, le premier recouvrement minimal absolu s'élève à 5 % de la surface de la bobine d'induction (15, HE12), sachant que seuls des recouvrements d'au moins le premier recouvrement minimal absolu sont considérés pour un chauffage et qu'un recouvrement inférieur reste ignoré comme s'il n'existait aucun recouvrement.

3. Procédé selon la revendication 1 ou 2, **caractérisé en ce que**, pour le cas où le premier récipient de cuisson (T1) ou le second récipient de cuisson (T2) recouvrent la bobine d'induction commune (15, HE12) de moins d'un second recouvrement minimal absolu de 10 % à 20 %, et que pour les deux récipients de cuisson (T1, T2) est prédéterminée une valeur de puissance de consigne supérieure à zéro, la bobine d'induction (15, HE12) fonctionne avec la puissance de consigne comme puissance réelle qui correspond à une valeur de puissance de consigne qui est prédéterminée pour le récipient de cuisson (T2) qui recouvre la bobine d'induction commune (15, HE12) avec le recouvrement minimal le plus élevé.

4. Procédé selon une des revendications précédentes, **caractérisé en ce que**, pour le cas où zéro est prédéterminé comme valeur de puissance de consigne pour un des deux récipients de cuisson (T2) ou que ce récipient de cuisson (T2) ne doit pas être chauffé, zéro est prédéterminé également comme puissance réelle pour la bobine d'induction commune (15, HE12) ou cette bobine d'induction commune (15, HE12) n'est pas exploitée, sachant que de préférence, d'autres bobines d'induction (15, HE10, HE11, HE13), qui sont recouvertes par le récipient de cuisson (T1) avec la valeur de puissance de consigne supérieure à zéro, sont exploitées avec une puissance réelle élevée, notamment élevée au point que la puissance de consigne supprimée de la bobine d'induction commune (15, HE12) est compensée.

5. Procédé selon au moins une des revendications précédentes, **caractérisé en ce qu'**en fonction des deux recouvrements relatifs, une puissance réelle de la bobine d'induction (15, HE12) pour son exploitation réelle est déterminée de manière à ne pas être inférieure ou à être au moins égale à ce qui correspond à la plus faible des deux valeurs de puissance de consigne, sachant que de préférence, la puissance réelle est déterminée supérieure à ce qui correspond à la plus faible des deux valeurs de puissance de consigne.

6. Procédé selon une des revendications précédentes, **caractérisé en ce qu'**en cas d'un recouvrement relatif de la bobine d'induction commune (15, HE12) de jusqu'à 10 % par le récipient de cuisson (T1) avec la valeur de puissance de consigne inférieure, la puissance réelle de la bobine d'induction commune (15, HE) est élevée au maximum au-dessus d'une puissance de consigne en correspondance avec de la valeur de puissance de consigne inférieure jusqu'à ce que la puissance réelle de la bobine d'induction commune (15, HE12) soit élevée au maximum de 60 %, sachant que de préférence, en cas d'un recouvrement relatif de la bobine d'induction commune (15, HE12) de plus de 30 % par le récipient de cuisson (T1) avec la valeur de puissance de consigne inférieure, la puissance réelle de la bobine d'induction commune (15, HE12) est augmentée de manière correspondante au maximum au-dessus de la valeur de puissance de consigne inférieure jusqu'à ce que la puissance réelle de la bobine d'induction commune (15, HE) soit augmentée au maximum de 20 %.

7. Procédé selon une des revendications précédentes, **caractérisé en ce qu'**en cas d'un recouvrement relatif de la bobine d'induction commune (15, HE) compris entre 10 % et 30 % par le récipient de cuisson (T1) avec la valeur de puissance de consigne inférieure, la puissance réelle correspondante de la bobine d'induction commune (15, HE 12) est calculée à partir des restrictions à 10 % et 30 % de manière croissante continue, de préférence croissante monotone.

8. Procédé selon une des revendications précédentes, **caractérisé en ce que** la réduction de puissance résultante pour le récipient de cuisson (T2) est calculée avec la valeur de puissance de consigne supérieure et réduite, en cas de dépassement d'un écart dont la valeur est supérieurs à 12 % ou en cas de différence totale de la puissance d'au moins 50 W de la valeur de puissance de consigne pour ce récipient de cuisson (T2), de sorte que la puissance réelle correspondante de la bobine d'induction commune (15, HE12) est diminuée de 20% au-dessous de la valeur de puissance de consigne, de préférence de sorte que la puissance réelle est diminuée au maximum de 17 %.

9. Procédé selon une des revendications précédentes, **caractérisé en ce qu'**en cas de réglage ou de changement d'une puissance réelle d'une bobine d'induction (15, HE) en correspondance avec une valeur de puissance réelle d'un récipient de cuisson (T) recouvrant ou d'une valeur de puissance réelle pour un récipient de cuisson (T), un retour d'informations est fourni à un opérateur pour identifier un changement du réglage de la valeur de puissance, sachant qu'en particulier, un affichage d'un retour optique indique aussi bien la valeur de puissance de consigne prédéterminée qu'une valeur de puissance réelle modifiée, de préférence en alternance et/ou avec une taille et/ou luminosité différente, sachant qu'en particulier, la valeur de puissance réelle modifiée est affichée plus grande et/ou plus lumineuse que la valeur de puissance de consigne prédéterminée.

10. Procédé selon une des revendications précédentes, **caractérisé en ce qu'**est fourni à un opérateur un retour optique et/ou acoustique si un récipient de cuisson (T) est décalé à tel point qu'une bobine d'induction (15, HE) n'est plus recouverte par deux récipients de cuisson (T), notamment plus avec un recouvrement minimal, sachant que de préférence dans le premier cas, un réglage supérieur de la valeur de puissance ou un réglage quelconque de la valeur de puissance est possible.

11. Procédé selon une des revendications précédentes, **caractérisé en ce qu'**un retour optique et/ou acoustique est fourni à un opérateur si une valeur de puissance de consigne pour un des récipients de cuisson (T) sur la bobine d'induction commune (15, HE) est modifiée de telle sorte que la bobine d'induction commune (15, HE) n'est plus recouverte par deux récipients de cuisson (T) avec des valeurs de puissance de consigne différentes, sachant que de préférence, les bobines d'induction (15, HE) recouvertes par les récipients de cuisson (T) sont exploitées avec une puissance réelle en correspondance avec des valeurs de puissance de consigne respectives prédéterminées.

12. Procédé selon une des revendications précédentes, **caractérisé en ce qu'**après le réglage ou le changement de la puissance réelle de la bobine d'induction commune (15, HE12) de préférence conjointement avec l'affichage du réglage ou du changement selon la revendication 8 ou 9, le récipient de cuisson (T1) est chauffé avec la valeur de puissance réelle inférieure, sachant que pour le cas où pendant un intervalle de 20 s maximum, au moins un récipient de cuisson (T) est déplacé de sorte à ne plus recouvrir la bobine d'induction commune (15, HE12) avec le recouvrement minimal selon la revendication 2, un changement d'une valeur de puissance de consigne d'un récipient de cuisson (T) ou d'une puissance de consigne d'une bobine d'induction (15, HE) n'a plus lieu, sachant qu'ensuite, les récipients de cuisson (T) sont chauffés automatiquement avec leurs valeurs de puissance de consigne prédéterminées respectives et les bobines d'induction (15, HE) sont chauffées avec leurs puissances de consigne prédéterminées respectives.

13. Procédé selon une des revendications précédentes, **caractérisé en ce qu'**une hausse de la puissance correspondante réelle pour la bobine d'induction commune (15, HE12) dépasse au maximum la valeur de puissance de consigne inférieure de sorte que la puissance réelle commune, qui est produite par toutes les bobines d'induction (15, HE12) recouvertes par le récipient de cuisson correspondant (T1, T2), est augmentée au maximum de 2 % à 10 %, de préférence au maximum de 5 %.

14. Procédé selon une des revendications précédentes, **caractérisé en ce qu'**une bobine d'induction (15, HE10, HE11, HE13) qui n'est recouverte que par un seul récipient de cuisson (T1, T2) qui recouvre également la bobine d'induction (15, HE12) commune est exploitée avec une puissance réelle qui, correspondant à cette situation, ne dépasse pas la valeur de puissance de consigne de ce récipient de cuisson (T1, T2) et se situe de préférence en dessous de la valeur de puissance de consigne quand la bobine d'induction commune (15, HE12) est exploitée avec une puissance réelle inférieure.

15. Procédé selon une des revendications précédentes, **caractérisé en ce que** les bobines d'induction (15, HE) servent au moins partiellement à identifier une position d'un récipient de cuisson (T) posé et sa taille, sachant que sont utilisés de préférence des capteurs de détection de casseroles supplémentaires avec une répartition dans une trame qui est plus étroite que celle de la disposition des bobines d'induction (15, HE) et/ou que des capteurs de détection de casseroles sont prévus entre les bobines d'induction (15, HE) au moins partiellement, sachant qu'en particulier, au moins un capteur de détection de casserole est disposé entre deux bobines d'induction (15, HE) juxtaposées latéralement et qu'au moins un capteur de détection de casserole est disposé entre deux bobines d'induction (15, HE) disposées l'une derrière l'autre.
